# EUROPÄISCHE PATENTSCHRIFT

(11) **EP 0 423 857 B1**
(45) Veröffentlichungstag und Bekanntmachung des Hinweises auf die Patenterteilung: **06.04.1994**
(21) Anmeldenummer: 90202517.0
(22) Anmeldetag: 24.09.1990
(51) Int. Cl.: B01D 63/08, F28F 3/08

(54) **Verfahren zur Herstellung eines Kanalblechs mit parallel zueinander angeordneten Blechen sowie Aufnahmevorrichtungen zur Durchführung des Verfahrens**
Process for making a channel plate with paralleled plates, device for carrying out the process
Procédé pour la production d'une tôle en U avec des tôles disposées parallèlement l'une à l'autre, dispositif pour la mise en oeuvre du procédé

(30) Priorität: 17.10.1989 DE 3934583
(43) Veröffentlichungstag der Anmeldung: 24.04.1991
(73) Patentinhaber: METALLGESELLSCHAFT Aktiengesellschaft, 60015 Frankfurt (DE)
(72) Erfinder: Sander, Ulrich, Dr., D-6382 Friedrichsdorf (DE); Zeh, Helmut, D-6472 Altenstadt (DE); Wilhelm, Rudolf, D-6092 Kelsterbach (DE)

(56) Entgegenhaltungen:
- EP-A- 0 021 301
- WO-A-85/03564
- FR-A- 2 077 678
- GB-A- 845 184

## Beschreibung

Die Erfindung betrifft ein Verfahren zur Herstellung eines Kanalblechs mit parallel zueinander angeordneten Blechen sowie Aufnahmevorrichtungen zur Durchführung des Verfahrens.

Die Zuführung strömender Medien zu den Platinen von Plattenapparaten wie Plattenwärmetauscher und Trennvorrichtungen zur Abtrennung von Komponenten aus strömenden Gemischen mittels selektiv durchlässigem flächigem Material, ist problematisch. Zum einen muß darauf geachtet werden, daß die strömenden Medien den einzelnen Platinen des Plattenapparates in einer möglichst gleichmäßigen Verteilung zugeführt werden. Zum anderen muß der Druckverlust niedrig gehalten werden, was besonders bei höheren Durchsätzen strömender Medien außerordentlich schwierig ist. In der DE-A- 36 01 909 wird eine Vorrichtung für die Abtrennung einzelner Komponenten aus strömenden, fluiden Gemischen mittels selektiv durchlässigem flächigem Material (Pervaporation, Gaspermeation, Umkehrosmose, Ultrafiltration) beschrieben. Diese Trennvorrichtung besteht aus einem unter Verwendung handelsüblicher Platinen von Plattenwärmetauschern aufgebauten Stapel von im wesentlichen rechteckigen und in ihrer äußeren Kontur übereinstimmenden, flächigen Bauteilen, die mittels Zugankern zwischen End-Platten randseitig abgedichtet zusammengepreßt sind und die innenliegende flache Strömungsnutzungsräume sowie in den Viereckbereichen integrierte Zu- und Abfuhrkanäle für strömende Medien bilden. Die Zuführung strömender Medien erfolgt dabei über Kanalbleche, die aus einem Bodenblech mit eingearbeiteten Nuten und einem Deckblech bestehen, die miteinander verbunden sind und die gleiche Dicke aufweisen wie die Platine. Das Kanalblech ist dabei mit über das Bodenblech vorstehenden Randstreifen des Deckbleches in entsprechenden Auflagen der Platine eingepaßt. Das in der DE-A- 36 01 909 beschriebene Kanalblech hat den Nachteil, daß bei hohen Durchsätzen strömender Medien ein relativ hoher Druckverlust zu verzeichnen ist. In einem Plattenapparat, bei welchem die Zuführung strömender Medien über ein Kanalblech erfolgt, welches in der DE-A- 36 01 909 offenbart ist, ist es nicht möglich, eine ausreichende Abtrennung einzelner Komponenten aus strömenden Medien durch eine Dampfpermeation zu erzielen.

In der GB-A-845184 wird eine Elektrodialysezelle beschrieben, in welcher ein Kanalblech mit parallel zueinander angeordneten Blechen integriert ist. Die miteinander verbundenen Bleche umfassen Kanäle für ein erstes strömendes Medium, die an jeweils allen Seiten in Strömungsrichtung durchgehend begrenzt sind. Die verwendeten Abstandhalter weisen jeweils eine Breite auf, die kleiner ist als die Breite eines jeden in Strömungsrichtung durchgehend begrenzten Kanals.

Der Erfindung liegt die Aufgabe zugrunde, ein Verfahren zur Herstellung eines Kanalblechs zu schaffen, das betriebssicher und technisch einfach durchgeführt werden kann. Der Erfindung liegt ferner die Aufgabe zugrunde, Aufnahmevorrichtungen zur Durchführung des Verfahrens zu schaffen.

Die der Erfindung zugrunde liegende Aufgabe wird dadurch gelöst, daß die Abstandhalter in der Trägerplatte einer Aufnahmevorrichtung fixiert werden, das erste Blech auf die Abstandhalter gelegt und mit den Abstandhaltern verbunden wird, und daß anschließend das mit den Abstandhaltern verbundene erste Blech aus der Aufnahmevorrichtung entfernt wird, daß ein zweites Blech auf die Trägerplatte der gleichen Aufnahmevorrichtung oder auf die Trägerplatte einer zweiten Aufnahmevorrichtung, je nachdem ob das zweite Blech gleich groß oder größer als das erste Blech ist, gelegt und fixiert wird, und daß nachher die Abstandshalter mit ihrer dem ersten Blech abgewandten Seite auf das fixierte zweite Blech gelegt und fixiert werden und anschließend mit dem zweiten Blech verbunden werden. Als Abstandhalter können alle Teile verwendet werden, die sich mit den Blechen verbinden lassen. So können beispielsweise die Abstandhalter aus Drahtstücken bestehen, die einen rechteckigen, kreisförmigen oder ovalen, beispielsweise elliptischen Querschnitt haben. Unter der Breite des Abstandhalters ist bei einem Abstandhalter mit konstantem Querschnitt in Strömungsrichtung des ersten strömenden Mediums die Dicke des Abstandhalters in Höhe des halben Abstandes zwischen den parallel zueinander angeordneten Blechen quer zur Strömungsrichtung des ersten strömenden Mediums anzusehen. Ist die Querschnittsfläche des Abstandhalters in Strömungsrichtung des ersten strömenden Mediums nicht konstant, so ist als Breite des Abstandhalters die mittlere Dicke des Abstandhalters in Höhe des halben Abstandes zwischen den parallel zueinander angeordneten Blechen quer zur Strömungsrichtung des ersten strömenden Mediums anzusehen. Die einzelnen Kanäle, die von den parallel zueinander angeordneten Blechen umfaßt werden sind durchgehend begrenzt, d.h., zwischen den einzelnen Kanälen besteht keine Verbindung. Der Einsatz eines solchen Kanalblechs hat den Vorteil, daß bei hohen Durchsätzen strömender Medien der Druckverlust relativ niedrig gehalten werden kann, wobei jedoch eine gleichmäßige Verteilung der strömenden Medien auf jeder einzelnen Platine des Plattenapparates sichergestellt ist. Werden die Kanalbleche beispielsweise in einer Trennvorrichtung zur Abtrennung einzelner Komponenten aus strömenden Gemischen, wie in der DE-OS 36 01 909 beschrieben, eingesetzt, so kann eine Abtrennung einzelner Komponenten auch durch Dampfpermeation in ausreichendem Maße durchgeführt werden. Wird die Breite der Abstandhalter jeweils kleiner als die Breite eines jeden in Strömungsrichtung durchgehend begrenzten Kanals gewählt, so ergibt sich in den einzelnen Kanälen ein relativ großer Strömungsquerschnitt, welcher eine Absenkung des Druckverlustes ermöglicht. Bei der Vergrößerung des Strömungsquerschnitts wird Material eingespart, da zur Herstellung des Kanalblechs im Vergleich zu dem in der DE-A- 36 01 909 beschriebenen Kanalblech, keine Nuten in eine Blechplatte eingefräst werden müssen, um die einzelnen Strömungskanäle zu bilden. Die Dicke des Kanalblechs kann jeder Blechdicke handelsüblicher Platinen von Plattenapparaten angepaßt werden, so daß ein nachträglicher Einbau in bereits vorhandene Plattenapparate möglich ist. Dabei ist es nicht erforderlich, daß das eine Blech mit gegenüber dem anderen Blech vorstehenden Randstreifen versehen ist, welche in Auflagen einer Platine eingepaßt werden, wie in der DE-A-36 01 909 beschrieben. Es können auch gleichgroße parallel zueinander angeordnete Bleche verwendet werden, wobei das Kanalblech beispielsweise durch Kleben in einer Aussparung einer Platine befestigt werden kann. Je nach Anwendungsfall ist es jedoch auch möglich, das Kanalblech in einem Rahmen zwischen zwei Platinen eines Plattenapparates anzuordnen. So kann beispielsweise das Kanalblech in einem Dichtungsrahmen einer Trennvorrichtung, in welchem eine selektiv durchlässige Membran eingespannt ist, integriert werden. Eine parallele Anordnung der Kanäle für ein erstes strömendes Medium ist nicht zwingend notwendig. Die Kanäle können beispielsweise auch sternförmig angeordnet sein. Das erfindungsgemäße Verfahren zur Herstellung des Kanalblechs hat den Vorteil, daß eine Zentrierung der Abstandhalter leicht erfolgen kann und eine Verbindung der einzelnen Abstandhalter sowohl mit dem ersten als auch mit dem zweiten Blech in der Weise erfolgt, daß ein Verziehen der Bleche während der Herstellung des Kanalblechs ausgeschlossen werden kann. Ferner ist dieses Verfahren relativ schnell durchführbar, so daß auch größere Mengen an erfindungsgemäßen Kanalblechen in relativ kurzer Zeit hergestellt werden können.

Nach einer bevorzugten Ausgestaltung der Erfindung erfolgt das Verbinden der Bleche mit den Abstandhaltern durch Punktschweißen. Durch diese Maßnahme lassen sich die Abstandhalter schnell und sicher mit den einzelnen Blechen verbinden.

Nach einer weiteren Ausgestaltung der Erfindung erfolgt das Verbinden der Bleche mit den Abstandhaltern durch Punktschweißen im Abstand von 2 bis 100 mm. Durch diese Maßnahme können die von den parallel zueinander angeordneten Blechen umfaßten Kanäle für ein erstes strömendes Medium technisch einfach durchgehend begrenzt und somit dicht voneinander getrennt werden.

Die der Erfindung zugrunde liegende Aufgabe wird weiterhin durch die Schaffung einer Aufnahmevorrichtung gelöst, die aus einer Trägerplatte mit nutförmigen Einkerbungen und mindestens einer Öffnung besteht. Diese Vorrichtung hat den Vorteil, daß das mit den Abstandhaltern zu verbindende Blech mit sämtlichen Abstandhaltern gleichzeitig in Kontakt gebracht wird, so daß die Abstandhalter gleichzeitig in einer automatischen Fertigung mit dem jeweiligen Blech verbunden werden können. Jede nutförmige Einkerbung ist der äußeren Form der Abstandhalter angepaßt, so daß diese leicht in den nutförmigen Einkerbungen fixiert werden können. Durch die Öffnung wird das Verbinden der Abstandhalter mit den Blechen erleichtert.

Gemäß einer weiteren Ausgestaltung der Erfindung ist eine Längsseite und eine Querseite der Trägerplatte mit einem Anschlag versehen. Dies hat den Vorteil, daß das jeweils mit den Abstandhaltern zu verbindende Blech fixiert werden kann, so daß das Verbinden der Abstandhalter mit dem jeweiligen Blech erleichtert wird.

Die der Erfindung zugrunde liegende Aufgabe wird auch durch die Schaffung einer weiteren Aufnahmevorrichtung gelöst, die aus einer Trägerplatte mit mindestens einer Öffnung und mindestens einem Anschlag, der mit seiner Nut parallel zur Ebene der Trägerplatte versehen ist, besteht. Eine solche Vorrichtung ermöglicht die Herstellung des Kanalblechs mit parallel zueinander angeordneten Blechen, welche eine unterschiedliche Größe aufweisen. Nachdem die Abstandhalter an dem kleineren Blech befestigt worden sind, kann das größere Blech in einer Nut parallel zur Ebene der Trägerplatte fixiert werden, so daß auch in diesem Fall die Verbindung der einzelnen Abstandhalter mit dem größeren Blech relativ schnell erfolgen kann.

Gemäß einer weiteren Ausgestaltung der Erfindung werden die Öffnungen in Form von Bohrungen ausgeführt. Dadurch wird das Verbinden der Abstandhalter mit den Blechen durch Punktschweißen erleichtert, da die jeweilige Elektrode in den Bohrungen geführt werden kann, so daß sich jeder Schweißpunkt einfacher festlegen läßt.

Gemäß einer weiteren Ausgestaltung der Erfindung bestehen die Trägerplatten und die Anschläge aus einem elektrisch nicht leitenden Werkstoff. Diese Maßnahme ermöglicht eine relativ problemlose Verbindung der einzelen Abstandhalter mit den jeweiligen Blechen durch ein Elektro-Schweißverfahren.

Das nach dem erfindungsgemäßen Verfahren hergestellte Kanalblech kann als Medienzuführung und/oder Medienabführung für ein erstes strömendes Medium in einem Plattenapparat verwendet werden, wobei das Kanalblech ebenflächig in einer Platine oder einem Rahmen angeordnet ist und jeweils mit einer Zuführung oder Abführung für ein erstes strömendes Medium verbunden ist. Dies ermöglicht eine besonders gleichmäßige Verteilung des strömenden Mediums auf der Platine. Ist das Kanalblech direkt mit einer Zuführung verbunden, so ist sichergestellt, daß das erste strömende Medium zum Kanalblech gelangen kann. Ist das Kanalblech mit einer Abführung verbunden, so kann das strömende Medium direkt am Kanalblech abgeführt werden.

Als Plattenapparat kann dabei auch eine Vorrichtung zur Abtrennung einzelner Komponenten aus strömenden Medien mittels selektiv durchlässigem, flächigem Material benutzt werden, die aus mindestens einem aus Platinen von Wärmetauschern aufgebauten Stapel von flächigen Bauteilen besteht, die innenliegende Strömungsnutzungsräume sowie integrierte Zuführungen und Abführungen für ein erstes strömendes Medium aufweisen. Dabei ist vorteilhaft, daß das aus den einzelnen Komponenten bestehende strömende Medium relativ gleichmäßig auf der Membran verteilt wird. Als Trennvorrichtung kann beispielsweise eine solche verwendet werden, die in der DE-A- 36 01 909 beschrieben wird.

Der Druckverlust in einer solchen Trennvorrichtung kann relativ gering gehalten werden. Ein weiterer Vorteil besteht darin, daß eine Abtrennung einzelner Komponenten durch Dampfpermeation durchgeführt werden kann. Das Kanalblech kann dabei jeweils direkt in der Platine oder in einem Dichtungsrahmen angeordnet sein. Auch läßt sich das Kanalblech in einer Trennvorrichtung in einem Rahmen integrieren, in welchem eine selektiv durchlässige Membran eingespannt ist.

Das Kanalblech kann auch vorteilhaft in einem Plattenwärmetauscher angeordnet werden. Durch die gleichmäßige Verteilung strömender Medien, die durch das Kanalblech in den einzelnen Kammern des Plattenwärmetauschers erreicht wird, läßt sich eine thermische Behandlung wirkungsvoll durchführen, da das Kanalblech eine optimale Ausnutzung der Wärmetauscherfläche ermöglicht. Auch läßt sich durch das Kanalblech der Druckverlust in einem Plattenwärmetauscher niedrig halten.

Ferner ist die Anordnung des nach dem erfindunsgemäßen Verfahren hergestellten Kanalblechs in einem Plattenwärmetauscher möglich, in welchem zwischen zwei benachbarten, parallel zueinander angeordneten Kanalblechen mindestens ein weiterer Kanal für ein zweites strömendes Medium angeordnet ist. Hierbei ist vorteilhaft, daß ein Plattenwärmetauscher relativ schnell an einem neuen Durchsatz strömender Medien angepaßt werden kann, indem weitere Kanalbleche in den Wärmetauscher integriert werden oder überzählige Kanalbleche dem Wärmetauscher entnommen werden können.

Der Gegenstand der Erfindung wird nachfolgend anhand der Zeichnung (Fig. 1 bis 10) näher erläutert.
- Figur 1: zeigt die perspektivische Darstellung eines Kanalblechs.
- Figur 2: zeigt den Schnitt A-A gemäß Figur 1.
- Figur 3: zeigt eine Aufnahmevorrichtung mit einer mit nutförmigen Einkerbungen versehenen Trägerplatte, einer Öffnung, einem Abstandhalter und einem ersten Blech.
- Figur 4: zeigt eine Aufnahmevorrichtung gemäß Figur 3 mit einem ersten Blech und einem zweiten Blech.
- Figur 5: zeigt eine Aufnahmevorrichtung mit einer Trägerplatte und einer Öffnung sowie einem Anschlag, der mit einer Nut parallel zur Ebene der Trägerplatte versehen ist.
- Figur 6: zeigt die Draufsicht auf eine weitere Aufnahmevorrichtung, bei welcher die Öffnungen in Form von Bohrungen ausgeführt sind.
- Figur 7a: zeigt die Platine eines Plattenapparates mit zwei integrierten Kanalblechen.
- Figur 7b: zeigt eine Anordnungsmöglichkeit des Kanalblechs in der Platine eines Plattenapparates.
- Figur 7c: zeigt einen Ausschnitt aus einer Platine eines Plattenapparates mit integriertem Kanalblech, bei dem die Kanäle parallel zueinander angeordnet sind.
- Figur 7d: zeigt einen Ausschnitt aus einer Platine eines Plattenapparates mit integriertem Kanalblech, in welchem die Kanäle sternförmig angeordnet sind.
- Figur 8a: zeigt den Rahmen eines Plattenapparates mit zwei integrierten Kanalblechen.
- Figur 8b: zeigt eine selektiv durchlässige Membran für die Abtrennung einzelner Komponenten aus strömenden Medien.
- Figur 9: zeigt eine Ausführung eines Plattenapparates zur Abtrennung einzelner Komponenten aus strömenden Medien mittels selektiv durchlässigem flächigem Material.
- Figur 10: zeigt den Ausschnitt aus einem Plattenwärmetauscher mit zwei integrierten Kanalblechen.

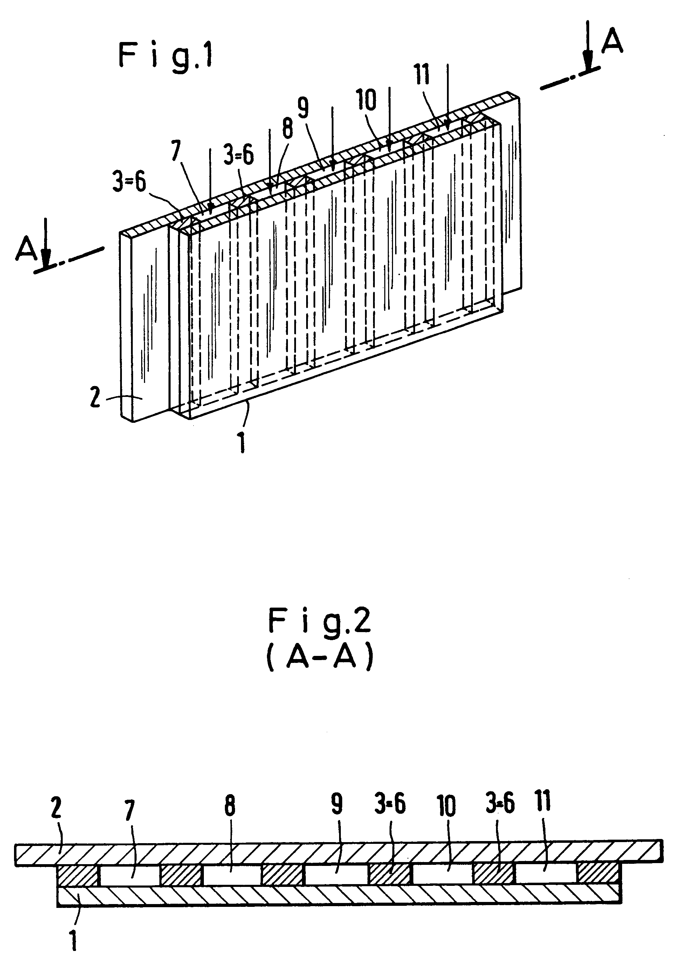

In Figur 1 ist ein Kanalblech mit parallel zueinander angeordneten Blechen (1, 2), die durch Abstandhalter (3) miteinander verbunden sind und Kanäle (7 bis 11) für ein erstes strömendes Medium umfassen, perspektivisch dargestellt. Als Abstandhalter (3) sind in dieser Ausführungsform Blechstreifen (6) vorgesehen. Das erste strömende Medium tritt in Pfeilrichtung in das Kanalblech ein und durchströmt die Kanäle (7 bis 11). Bei dem in Figur 1 dargestellten Kanalblech ist das zweite Blech (2) größer ausgeführt als das erste Blech (1). Diese konstruktive Maßnahme ist jedoch nicht zwingend.

Der in Figur 1 angedeutete Schnitt A-A ist in Figur 2 dargestellt. Zwischen den parallel angeordneten Blechen (1, 2) sind Blechstreifen (6) als Abstandhalter (3) angeordnet. Wie in Figur 1 sind auch hier Kanäle (7 bis 11) für ein erstes strömendes Medium dargestellt. Je nach Durchsatz der einzelnen strömenden Medien können jedoch auch mehr als fünf Kanäle bzw. weniger als fünf Kanäle für ein erstes strömendes Medium angeordnet werden.

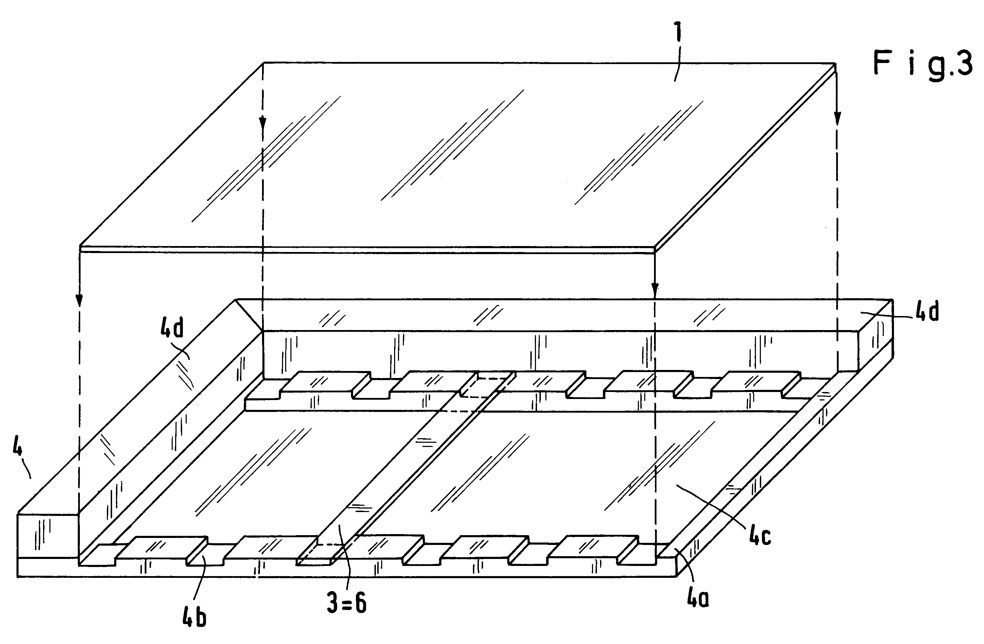

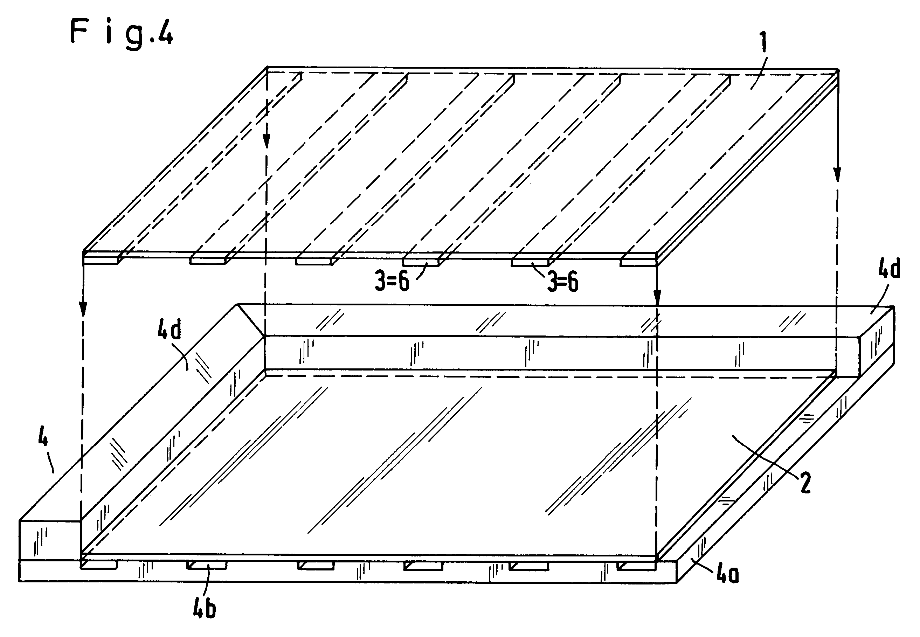

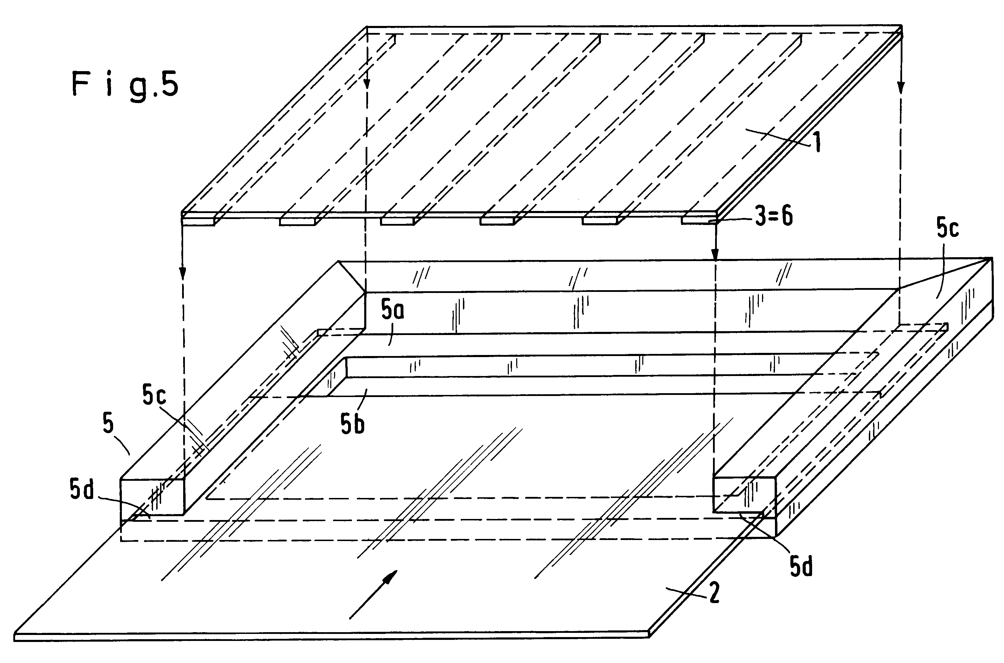

In den Figuren 3 bis 5 ist das Verfahren zur Herstellung des Kanalblechs veranschaulicht. Wie Figur 3 zu entnehmen ist, werden zuerst die Abstandhalter (3), in diesem Fall handelt es sich dabei um Blechstreifen (6), in die nutförmigen Einkerbungen (4b) der Trägerplatte (4a) eingelegt. Die Trägerplatte (4a) ist mit einem Anschlag (4d) versehen und weist eine Öffnung (4c) auf. Nachdem die einzelnen Abstandhalter in den nutförmigen Einkerbungen fixiert sind, wird das erste Blech (1) auf die Trägerplatte (4a) gelegt und durch den Anschlag (4d) der Aufnahmevorrichtung (4) fixiert. Anschließend werden die Abstandhalter (3) mit dem ersten Blech (1) verbunden. Das Verbinden kann dabei durch Schweißen erfolgen. Nachdem die Abstandhalter (3) mit dem ersten Blech (1) verbunden worden sind, wird, wie in Figur 4 dargestellt, auf die Trägerplatte (4a) ein zweites Blech (2) gelegt und durch den Anschlag (4d) der Aufnahmevorrichtung (4) fixiert. Anschließend werden die Abstandhalter (3) mit ihrer dem ersten Blech (1) abgewandten Seite auf das zweite Blech (2) gelegt. Nachdem nun auch das erste Blech (1) durch den Anschlag (4d) fixiert wurde, werden die Abstandhalter (3) mit dem zweiten Blech (2), beispielsweise durch Schweißen, verbunden. Auf diese Weise läßt sich ein Kanalblech mit zwei parallel zueinander angeordneten, gleichgroßen Blechen (1, 2) herstellen. Soll das Kanalblech, wie beispielsweise in Figur 1 dargestellt, seitlich vorstehende Randstreifen besitzen, ist somit das zweite Blech (2) größer als das erste Blech (1) zu wählen, kann eine Aufnahmevorrichtung (5) für die Herstellung des erfindungsgemäßen Kanalblechs verwendet werden. In Figur 5 ist eine Aufnahmevorrichtung (5) mit einer Trägerplatte (5a), mit einer Öffnung (5b) und einem Anschlag (5c), der mit einer Nut (5d) parallel zur Ebene der Trägerplatte (5a) versehen ist, dargestellt. Zuerst werden die Abstandhalter (3) in einer Aufnahmevorrichtung (4) mit einem ersten Blech (1), wie oben ausführlich erläutert, verbunden. Anschließend wird das größere zweite Blech (2) durch die Nut 5d der Aufnahmevorrichtung (5) bis zum Anschlag (5c) eingeschoben. Zusammen mit dem ersten Blech (1) werden die Abstandhalter (3) mit ihrer dem ersten Blech (1) abgewandten Seite auf das zweite Blech (2) gelegt. Das Fixieren der Bleche erfolgt durch den Anschlag (5c). Anschließend werden die Abstandhalter mit dem zweiten Blech (2) beispielsweise durch Punktschweißen verbunden. Die Öffnung (5b) (vgl. Figur 5) und die Öffnung (4c) (vgl. Figur 3) ermöglichen den Zugang der einen Elektrode und können verschiedenartig ausgebildet sein.

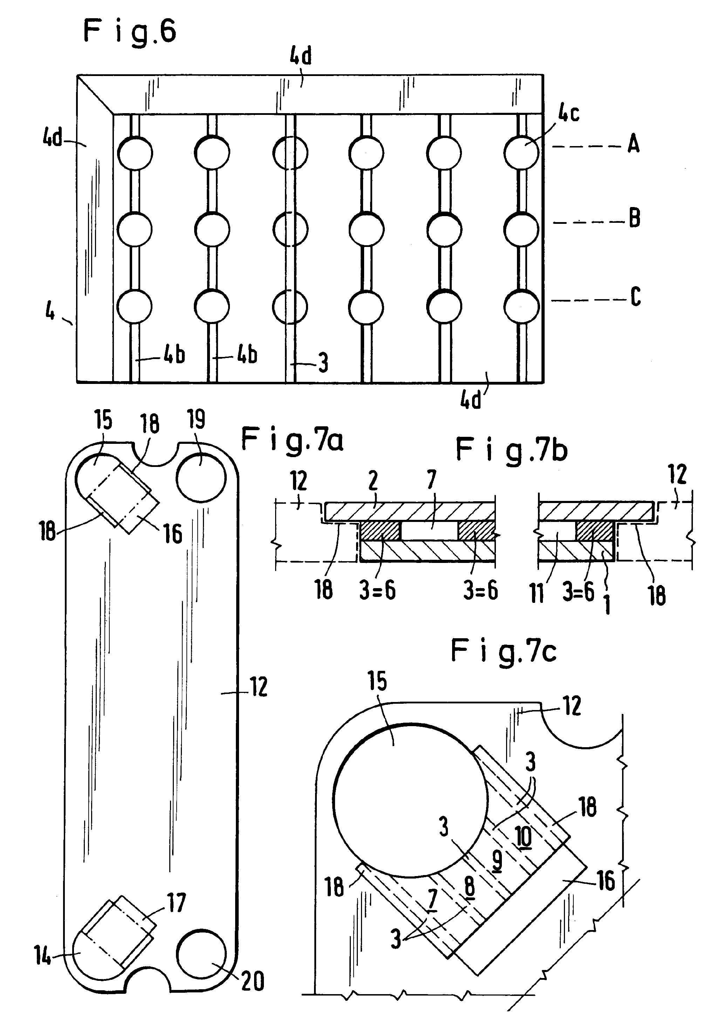

In Figur 6 ist die Draufsicht auf eine weitere Ausführungsform der Aufnahmevorrichtung (4) mit einem Anschlag (4d), einer mit nutförmigen Einkerbungen (4b) versehenen Trägerplatte (4a) und Öffnungen (4c) dargestellt. Die Öffnungen (4c) sind in Form von Bohrungen ausgeführt und bilden drei Lochreihen A, B, C. In einer nutförmigen Einkerbung (4b) ist ein Abstandhalter (3) dargestellt. Werden die Öffnungen (4c) in Form von Bohrungen ausgeführt, so kann das Verbinden der Abstandhalter (3) mit den Blechen (1, 2) durch Punktschweißen leichter erfolgen, da die Elektrode in der jeweiligen Öffnung (4c) geführt werden kann. Eine automatische Fertigung wird dadurch erleichtert. In Figur 7a ist eine Platine (12) eines Plattenapparates mit zwei integrierten Kanalblechen dargestellt. Das eine strichpunktiert dargestellte Kanalblech ist mit einer Zuführung (14) für ein erstes strömendes Medium verbunden und das zweite strichpunktiert dargestellte Kanalblech ist mit einer Abführung (15) für ein erstes strömendes Medium verbunden. Die Platine (12) ist ferner mit zwei Bohrungen (19) und (20) für ein zweites strömendes Medium versehen. Beide strichpunktiert dargestellten Kanalbleche sind in Ausnehmungen (16 bzw. 17) der Platine (12) angeordnet, wobei das zweite Blech (2) größer als das erste Blech (1) ausgeführt ist und mit Auflagen (18) der Platine (12) verbunden ist.

In Figur 7b ist ein Querschnitt durch das Kanalblech und die Platine (12), welche mit Auflagen (18) versehen ist, dargestellt. zwischen den Blechen (1 und 2) sind die Abstandhalter (3) und die Kanäle (7), (11) für ein erstes strömendes Medium angeordnet. Das zweite Blech (2) ist größer als das erste Blech (1) ausgeführt und mit der Platine (12) über die Auflagen (18) verbunden. Das Verbinden des zweiten Bleches (2) mit der Auflage (18) kann beispielsweise durch Schweißen oder Kleben erfolgen.

In Figur 7c ist ein Ausschnitt der Platine (12) mit integriertem Kanalblech und einer Abführung (15) für ein erstes strömendes Medium dargestellt. Das Kanalblech ist mit parallel zueinander angeordneten Kanälen (7) bis (10) für ein erstes strömendes Medium versehen und in einer Aussparung (16) mit der Platine (12) über Auflagen (18), wie in Figur 7b dargestellt, verbunden. Im Vergleich zur Darstellung in Figur 7a ist das Kanalblech kreisförmig ausgespart und somit der Abführung (15) für ein erstes strömendes Medium angepaßt.

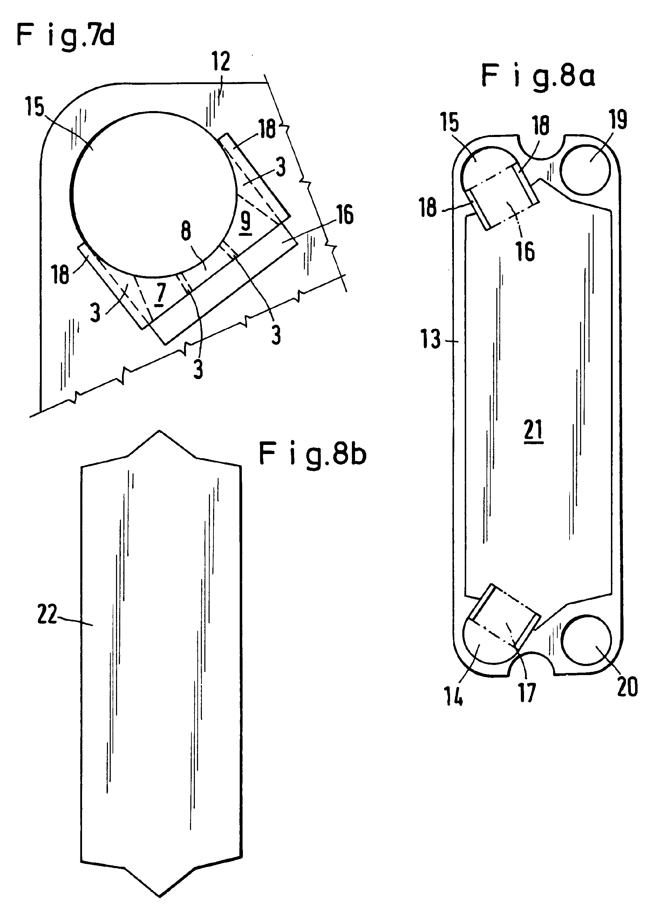

In Figur 7d ist ebenfalls ein Ausschnitt aus einer Platine (12) mit einer Abführung (15) für eine erstes strömendes Medium mit integriertem Kanalblech dargestellt. Im Gegensatz zu dem in Figur 7c dargestellten Kanalblech ist das in Figur 7d dargestellte Kanalblech mit sternförmig angeordneten Kanälen (7), (8) und (9) für ein erstes strömendes Medium versehen.

In Figur 8 ist ein Rahmen (13) eines Plattenapparates mit zwei integrierten Kanalblechen dargestellt, die mit einer Zuführung (14) bzw. Abführung (15) für ein erstes strömendes Medium verbunden sind. Der Rahmen (13) weist ferner Bohrungen (19), (20) für ein zweites strömendes Medium auf. Die strichpunktiert dargestellten Kanalbleche sind dabei, wie in Figur 7b gezeigt, in Ausnehmungen (16), (17) des Rahmens (13) angeordnet und mit dem Rahmen (13) über Auflagen (18) verbunden. Der Rahmen (13) besteht in der Regel aus abdichtendem Material und ist zwischen zwei Platinen (12) angeordnet, zwischen welchen er einen Strömungsnutzungsraum (21) bildet. In Trennvorrichtungen für die Abtrennung einzelner Komponenten aus strömenden Medien ist ein selektiv durchlässige Membran, wie sie in Figur 8b dargestellt ist, an einer Seite des Rahmens (13) eingespannt. Über die Zuführung (14) für ein erstes strömendes Medium gelangt das zu trennende strömende Medium direkt zur selektiv durchlässigen Membran (22) und strömt an dieser der Abführung (15) für ein erstes strömendes Medium zu.

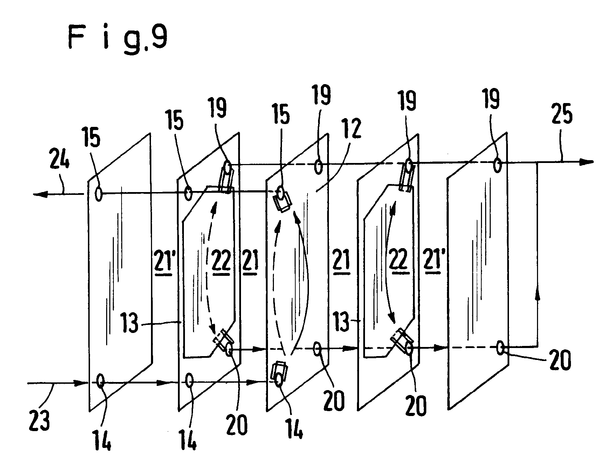

In Figur 9 ist der prinzipielle Aufbau einer Trennvorrichtung in Form eines Plattenapparates vereinfacht dargestellt. Das zu trennende strömende Medium (23) gelangt durch die Zuführung (14) für ein erstes strömendes Medium zu der Platine (12) und wird durch ein Kanalblech, das mit der Zuführung (14) verbunden ist, auf beiden Seiten der Platine (12) gleichmäßig verteilt. Die Platine (12) ist zwischen zwei Rahmen (13) angeordnet, die auf der jeweils der Platine (12) zugewandten Seite mit einer selektiv durchlässigen Membran (22) versehen sind. Die Membranen (22) sind für eine Komponente des zu trennenden strömenden Mediums durchlässig, die auf deren Rückseite anfällt (Permeat). Während das zu trennende strömende Medium der Abführung (15) für ein erstes strömendes Medium an der Platine (12) beidseitig im Strömungsnutzungsraum (21) zufließt, gelangt das Permeat (25) in die innenliegenden Strömungsnutzungsräume (21') und von dort über Kanalbleche zu den in den Rahmen (13) angeordneten Bohrungen (19), (20) für ein zweites strömendes Medium. Der Rest des zu trennenden strömenden Mediums, das Retentat (24), wird über die Abführung (15) für ein erstes strömendes Medium aus dem Plattenapparat abgeführt. Die Kanalbleche können jedoch auch in Trennvorrichtungen integriert werden, die ähnlich der Trennvorrichtung ausgestaltet sind, die in der DE-OS 36 01 909 beschrieben ist.

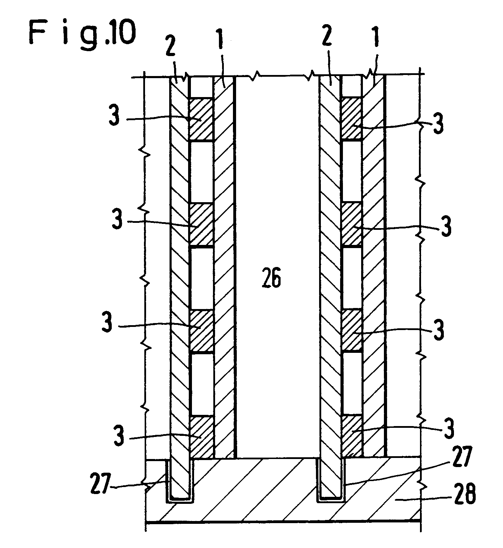

In Figur 10 ist ein Ausschnitt aus einem Plattenwärmetauscher mit zwei Kanalblechen dargestellt, deren jeweiliges zweite Blech (2) größer als das erste Blech (1) ausgeführt ist. Beide Kanalbleche weisen Kanäle (7) bis (11) für ein erstes strömendes Medium auf. Zwischen beiden Kanalblechen ist ein weiterer Kanal (26) für ein zweites strömendes Medium angeordnet. Jedes Kanalblech ist über eine Nut (27) mit dem Gehäuse (28) des Plattenwärmetauschers verbunden.

## Patentansprüche

1. Verfahren zur Herstellung eines Kanalblechs mit parallel zueinander angeordneten Blechen (1, 2), welche miteinander verbunden sind und Kanäle (7 bis 11) für ein erstes strömendes Medium umfassen, die an jeweils allen Seiten in Strömungsrichtung durchgehend begrenzt sind und bei dem die parallel zueinander angeordneten Bleche (1, 2) durch in Strömungsrichtung angeordnete Abstandhalter (3), deren jeweilige Breite kleiner als die Breite eines jeden in Strömungsrichtung durchgehend begrenzten Kanals (7 bis 11) ist, miteinander verbunden sind, dadurch gekennzeichnet, daß die Abstandhalter (3) in der Trägerplatte (4a) einer Aufnahmevorrichtung (4) fixiert werden, das erste Blech (1) auf die Abstandhalter (3) gelegt und mit den Abstandhaltern (3) verbunden wird, und daß anschließend das mit den Abstandhaltern (3) verbundene erste Blech (1) aus der Aufnahmevorrichtung (4) entfernt wird, daß ein zweites Blech (2) auf die Trägerplatte (4a) der gleichen Aufnahmevorrichtung (4) oder auf die Trägerplatte (5a) einer zweiten Aufnahmevorrichtung (5), je nachdem ob das zweite Blech gleich groß oder größer als das erste Blech ist, gelegt und fixiert wird, und daß nachher die Abstandshalter (3) mit ihrer dem ersten Blech abgewandten Seite auf das fixierte zweite Blech gelegt und fixiert werden und anschließend mit dem zweiten Blech verbunden werden.

2. Verfahren nach Anspruch 1, dadurch gekennzeichnet, daß das Verbinden der Bleche (1, 2) mit den Abstandhaltern (3) durch Punktschweißen erfolgt.

3. Verfahren nach Anspruch 2, dadurch gekennzeichnet, daß das Verbinden der Bleche (1, 2) mit den Abstandhaltern (3) durch Punktschweißen im Abstand von 2 bis 100 mm erfolgt.

4. Aufnahmevorrichtung (4) zur Durchführung des Verfahrens nach einem der Ansprüche 1 bis 3 sofern die Bleche (1, 2) die gleiche Größe aufweisen, dadurch gekennzeichnet, daß sie aus einer Trägerplatte (4a) mit nutförmigen Einkerbungen (4b) und mindestens einer Öffnung (4c) besteht.

5. Aufnahmevorrichtung (4), nach Anspruch 4 dadurch gekennzeichnet, daß eine Längsseite und eine Querseite der Trägerplatte (4a) mit einem Anschlag (4d) versehen sind.

6. Aufnahmevorrichtung (5) zur Durchführung des Verfahrens nach einem der Ansprüche 1 bis 3 sofern die Bleche (1, 2) keine gleiche Größe aufweisen, dadurch gekennzeichnet, daß sie aus einer Trägerplatte (5a) mit mindestens einer Öffnung (5b) und mindestens einem Anschlag (5c), der mit einer Nut (5d) parallel zur Ebene der Trägerplatte (5a) versehen ist, besteht.

7. Aufnahmevorrichtung (4 oder 5) nach Anspruch 4 oder 6, dadurch gekennzeichnet, daß die Öffnungen (4c) oder (5b) in Form von Bohrungen ausgeführt sind.

8. Aufnahmevorrichtung (4 oder 5) nach einem der Ansprüche 5 oder 6, dadurch gekennzeichnet, daß die Trägerplatten (4a) oder (5a) und die Anschläge (4d) oder (5c) aus einem elektrisch nicht leitenden Werkstoff bestehen.

## Claims

1. A method for producing a channel plate having metal plates (1, 2) arranged parallel to one another which are connected together and comprise channels (7 to 11) for a first fluid medium, which are each continuously limited on all sides in the direction of flow, and in which the plates (1, 2) which are arranged parallel to one another are connected together by spacers (3) arranged in the direction of flow, the respective width of which is smaller than the width of each channel (7 to 11) which is continuously limited in the direction of flow, characterised in that the spacers (3) are fixed in the carrier plate (4a) of a fixture (4), the first plate (1) is placed on the spacers (3) and is connected to the spacers (3), and that then the first plate (1) connected to the spacers (3) is removed from the fixture (4), that a second plate (2) is laid on the carrier plate (4a) of the same fixture (4) or on the carrier plate (5a) of a second fixture (5), depending on whether the second plate is the same size as or larger than the first plate, and is fixed, and that subsequently the spacers (3) are laid with their sides remote from the first plate on the fixed second plate and are fixed, and are then connected to the second plate.

2. A method according to Claim 1, characterised in that the connection of the plates (1, 2) to the spacers (3) takes place by spot-welding.

3. A method according to Claim 2, characterised in that the connection of the plates (1, 2) to the spacers (3) takes place by spot-welding at a distance of 2 to 100 mm.

4. A fixture (4) for performing the method according to one of Claims 1 to 3 provided that the plates (1, 2) are of the same size, characterised in that it consists of a carrier plate (4a) with groove-like recesses (4b) and at least one opening (4c).

5. A fixture (4) according to Claim 4, characterised in that a long side and a transverse side of the carrier plate (4a) are provided with a stop (4d).

6. A fixture (5) for performing the method according to one of Claims 1 to 3 provided that the plates (1, 2) are not of the same size, characterised in that it consists of a carrier plate (5a) having at least one opening (5b) and at least one stop (5c), which is provided with a groove (5d) parallel to the plane of the carrier plate (5a).

7. A fixture (4 or 5) according to Claim 4 or 6, characterised in that the openings (4c) or (5b) are in the form of bores.

8. A fixture (4 or 5) according to one of Claims 5 or 6, characterised in that the carrier plates (4a) or (5a) and the stops (4d) or (5c) are made of an electrically non-conductive material.

## Revendications

1. Procédé de fabrication d'une tôle en U avec des tôles (1, 2) disposées parallèlement l'une à l'autre qui sont reliées entre elles et enferment des canaux (7 à 11) pour un premier fluide en écoulement qui sont limités de tous les côtés, de bout en bout dans le sens d'écoulement, les tôles (1, 2) disposées parallèlement l'une à l'autre étant reliées entre elles par des entretoises (3) qui sont disposées dans le sens d'écoulement et dont la largeur est inférieure à la largeur de chaque canal (7 à 11) limité de bout en bout dans le sens d'écoulement, **caractérisé** par le fait que les entretoises (3) sont fixées dans la plaque support (4a) d'un dispositif de montage (4), la première tôle (1) est posée sur les entretoises (3) et est reliée avec les entretoises (3) et que la première tôle (1) reliée aux entretoises (3) est ensuite extraite du dispositif de montage (4), qu'une deuxième tôle (2) est posée et fixée sur la plaque support (4a) du même dispositif de montage (4) ou sur la plaque support (5a) d'un deuxième dispositif de montage (5), selon que la deuxième tôle a la même grandeur ou est plus grande que la première tôle et que les entretoises (3) sont ensuite posées avec leur côté éloigné de la première tôle, sur la deuxième tôle fixée et sont bloquées puis sont reliées à la deuxième tôle.

2. Procédé selon la revendication 1, **caractérisé** par le fait que l'assemblage des tôles (1, 2) avec les entretoises (2) s'effectue par soudage par points.

3. Procédé selon la revendication 2, **caractérisé** par le fait que l'assemblage des tôles (1, 2) avec les entretoises (3) s'effectue par soudage par points à une distance de 2 à 100 mm.

4. Dispositif de montage (4) pour la mise en oeuvre du procédé selon l'une des revendications 1 à 3 dans la mesure où les tôles (1, 2) ont la même grandeur, **caractérisé** par le fait qu'il est composé d'une plaque support (4a) avec des entailles en forme de rainures (4b) et au moins une ouverture (4c).

5. Dispositif de montage (4) selon la revendication 4, **caractérisé** par le fait qu'un côté longitudinal et un côté transversal de la plaque support (4a) sont munis d'une butée (4d).

6. Dispositif de montage (5) pour la mise en oeuvre du procédé selon l'une des revendications 1 à 3 dans la mesure où les tôles (1, 2) n'ont pas la même grandeur, **caractérisé** par le fait qu'il est composé d'une plaque support (5a) avec au moins une ouverture (5b) et au moins une butée (5c) qui est munie d'une rainure (5d) parallèlement au plan de la plaque support (5a).

7. Dispositif de montage (4 ou 5) selon la revendication 4 ou 6, **caractérisé** par le fait que les ouvertures (4c) ou (5b) sont réalisées sous forme de perçages.

8. Dispositif de montage (4 ou 5) selon l'une des revendications 5 ou 6, **caractérisé** par le fait que les plaques support (4a) ou (5a) et les butées (4d) ou (5c) sont en un matériau électriquement non-conducteur.
